# EUROPEAN PATENT APPLICATION

(11) **EP 4 811 508 A1**
(43) Date of publication of application: **23.09.2026**
(21) Application number: 26163993.4
(22) Date of filing: 11.03.2026
(51) Int. Cl.: H01M 50/147, H01M 50/342, H01M 50/375

(54) **CAP ASSEMBLY, RECHARGEABLE BATTERY, AND BATTERY PACK**

(30) Priority: 21.03.2025 KR 20250036648
(71) Applicant: SAMSUNG SDI CO., LTD., Yongin-si, Gyeonggi-do 17084 (KR)
(72) Inventor: Kim, Dae Kyu, 16678 Suwon-si (KR); Park, Jong Jun, 16678 Suwon-si (KR); Kim, Shin Jung, 16678 Suwon-si (KR); Seo, Kwang Soo, 16678 Suwon-si (KR)
(74) Representative: Marks & Clerk LLP

(57) **Abstract**

A cap assembly for a rechargeable battery includes a upper cap. A vent plate is positioned below the upper cap. A curable component-containing structure is positioned between the upper cap and the vent plate.

## Description

### BACKGROUND

### 1. Field of the Disclosure

The present disclosure relates to a cap assembly, a rechargeable battery, and a rechargeable battery pack.

### 2. Discussion of Related Art

With the rapid spread of electronic devices using batteries such as mobile phones, notebook computers, and electric vehicles, the demand for rechargeable batteries having high energy density and high capacity has rapidly increased. Accordingly, there has been research and development into improving the performance of rechargeable lithium batteries.

A rechargeable lithium battery includes an electrolyte and positive and negative electrodes containing an active material capable of intercalating and deintercalating lithium ions. A rechargeable lithium battery produces electrical energy by oxidation and reduction reactions when the lithium ions are intercalated/deintercalated into/from the positive electrode and the negative electrode.

The information disclosed in this section is for enhancement of understanding of the background of the present disclosure. It may include information that does not constitute the related art.

### SUMMARY OF THE DISCLOSURE

The present disclosure is directed to providing a cap assembly that does not deform or fracture at high temperature, a rechargeable battery including the cap assembly, and a battery pack including the rechargeable battery.

The present disclosure is also directed to providing a cap assembly having a low difference in operating pressure between room temperature and high temperature, a rechargeable battery including the cap assembly, and a battery pack including the rechargeable battery.

However, objects of the present disclosure are not limited to these objects, and other objects that are not specifically mentioned herein will be clearly understood by those skilled in the art based on the detailed description below.

A cap assembly according to the present disclosure includes an upper cap, a vent plate located below the upper cap, and a curable component-containing structure located between the upper cap and the vent plate.

The curable component may have a curing initiation temperature of 60 °C or higher.

The curable component may be liquid at room temperature.

The curable component may include at least one of urethane-based resin, a silicone-based resin, an epoxy-based resin, an amine-based resin, an amide-based resin, a (meth)acryl-based resin, an oligomer, and a monomer.

The curable component may be included in the curable component-containing structure in an amount of 50 wt% or more.

The curable component-containing structure may include a support having an open internal space and the curable component included in the internal space of the support.

A thickness of the support may be 0.2 mm or less.

The support may be elastic.

The support may include one or more of a polyolefin-based resin, a polyimide-based resin, a polyamide-based resin, a polyimideamide-based resin, and a polyester-based resin.

The curable component-containing structure may further include a curing agent.

The curing agent may be included in the curable component-containing structure in an amount of 10 to 50 wt%.

The curing agent may be liquid at room temperature.

The curing agent may include one or more of phenol-based, amine-based, acid anhydride-based, isocyanate-based, aziridine-based, epoxy-based, carbodiimide-based, polyamide-based, and polyimide-based materials.

The internal space of the support may be divided into a first zone and a second zone by a separator.

The first zone may include the curable component, and the second zone may include the curing agent.

The separator may have at least a shrinkable area that shrinks at high temperature.

The separator may further have a fixing area fixing the shrinkable area to the support.

A maximum thickness of the curable component-containing structure may range from 90 to 110% of a distance between the upper cap and the vent plate.

According to the present disclosure, there is provided a rechargeable battery including a case having an opening, an electrode assembly accommodated in the case, an upper cap disposed in the opening, a lower cap facing the upper cap and connected to the electrode assembly, a vent plate disposed between the upper cap and the lower cap, and a curable component-containing structure located between the upper cap and the vent plate.

According to the present disclosure, there is provided a battery pack including a housing, and a plurality of rechargeable batteries disposed inside the housing, wherein each of the rechargeable batteries includes a case having an opening, an electrode assembly accommodated in the case, an upper cap disposed in the opening, a lower cap facing the upper cap and connected to the electrode assembly, a vent plate disposed between the upper cap and the lower cap, and a curable component-containing structure positioned between the upper cap and the vent plate.

At least some of the above and other features of the invention are set out in the claims.

### BRIEF DESCRIPTION OF THE DRAWINGS

The drawings show embodiments of the present disclosure and further describe aspects and features of the present disclosure together with the detailed description. But the present is not limited to the embodiments set forth in the drawings.
FIG. 1 shows the trends in operating pressure, sealing pressure, and fracture pressure of a cap assembly at room-temperature and a high temperature.
FIG. 2 is a cross-sectional view of the cap assembly according to an embodiment of the present disclosure.
FIG. 3 shows a state after curing of a curable component in a curable component-containing structure in the cap assembly according to an embodiment of the present disclosure.
FIG. 4 is a cross-sectional view of the curable component-containing structure according to an embodiment of the present disclosure.
FIG. 5 shows a process of manufacturing a curable component-containing structure according to an embodiment of the present disclosure.
FIG. 6 is a cross-sectional view of a cap assembly according to another embodiment of the present disclosure.
FIG. 7 is a cross-sectional view of a rechargeable battery according to an embodiment of the present disclosure.
FIG. 8 shows a rechargeable battery pack according to an embodiment of the present disclosure.
FIG. 9 is a schematic view of a system for measuring operating pressures of examples and comparative examples.

### DETAILED DESCRIPTION OF EXAMPLE EMBODIMENTS

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical scope, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

According to an embodiment, deformation and/or fracture of a cap assembly can be suppressed at high temperature. Specifically, deformation and/or fracture of a vent, specifically a vent plate, by the cap assembly can be suppressed at high temperature. Accordingly, when a rechargeable battery is stored or used for a long time at high temperatures such as in a desert, the storage time or usable time can be extended, thereby increasing the usability of the rechargeable battery at high temperature.

According to an embodiment, the cap assembly can significantly reduce a difference in operating pressure between room temperature and high temperature. Accordingly, even when the temperature varies from room temperature to high temperature or from high temperature to room temperature, the cap assembly is not easily deformed. Thus, reliability of the rechargeable battery can be enhanced even when the temperature varies between room temperature and high temperature.

In the present specification, "room temperature" may range from 20 to 25 °C, and "high temperature" may range from 60 to 95 °C, for example, 60 to 90 °C.

In the present specification, "operating pressure" is a pressure at an initial point of deformation of a cap assembly. Specifically, the operating pressure may be a pressure at a point when a sub-plate and a vent plate are detached from the cap assembly or a pressure at a point when the vent plate and a lower cap are detached.

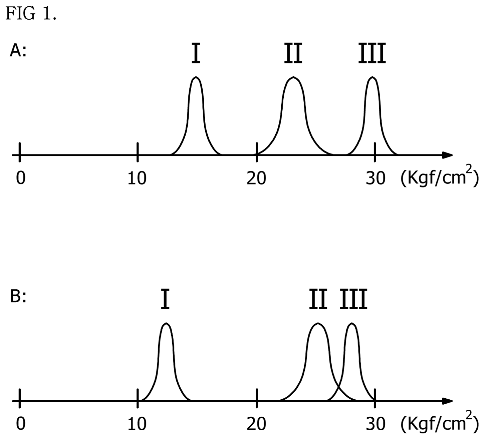

The operating pressure, the sealing pressure, and the fracture pressure within a battery will be described with reference to FIG. 1.

FIG. 1 shows the trends in an operating pressure I, a sealing pressure II, and a fracture pressure III of a cap assembly at room temperature in FIG. 1A and at high temperature in FIG. 1B. The operating pressure is as described above. The sealing pressure is a pressure at a point when the cap assembly and a gasket are separated from the rechargeable battery, and the fracture pressure is a pressure when a notch of the vent plate ruptures.

In general, the operating pressure is less than the sealing pressure, and the sealing pressure is less than the fracture pressure during the operation of the rechargeable battery. The operating pressure at high temperature is lower than that at room-temperature due to the higher external temperature. According to an embodiment, the cap assembly can make a rechargeable battery more used (or usable) at high temperature by reducing a difference between an operating pressure (I in FIG. 1A) at room-temperature and an operating pressure (I in FIG. 1B) at high temperature.

According to an embodiment, the cap assembly includes a curable component-containing structure. More specifically, the cap assembly includes the curable component-containing structure located between an upper cap and a vent plate. In the curable component-containing structure, at least a portion of the curable component may be cured at high temperatures, thereby increasing the hardness of the structure as compared to before curing. Accordingly, even when the rechargeable battery is stored or used at high temperatures, deformation and/or fracture of the cap assembly can be suppressed by the structure. Further, even when the temperature of the rechargeable battery changes from room temperature to high temperature or from high temperature to room temperature, the difference in the operating pressure of the cap assembly between room temperature and high temperature remains small.

According to an embodiment, the curable component-containing structure may include a curing agent in addition to a curable component. The curing agent may increase the speed that the curable component cures when the rechargeable battery is stored or used at high temperatures. Accordingly, by causing the curable component to cure quickly as the temperature changes from room temperature to high temperature, deformation of the cap assembly can be further suppressed.

According to an embodiment, the cap assembly includes an upper cap, a vent plate located below the upper cap, and a curable component-containing structure located between the upper cap and the vent plate.

According to an embodiment, the rechargeable battery includes a case having an opening, an electrode assembly accommodated in the case, an upper cap disposed in the opening, a lower cap disposed to face the upper cap and connected to the electrode assembly, a vent plate disposed between the upper cap and the lower cap, and a curable component-containing structure located between the upper cap and the vent plate.

According to an embodiment, a battery pack includes a housing, and a plurality of rechargeable batteries disposed inside the housing, wherein each of the rechargeable batteries includes a case having an opening, an electrode assembly accommodated in the case, an upper cap disposed in the opening, a lower cap disposed to face the upper cap and connected to the electrode assembly, a vent plate disposed between the upper cap and the lower cap, and a curable component-containing structure located between the upper cap and the vent plate.

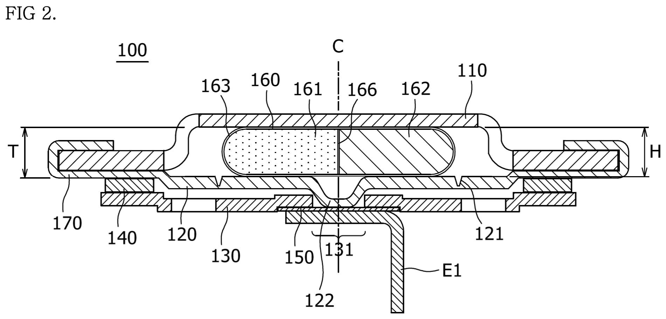

FIG. 2 is a schematic view showing a cap assembly according to an embodiment of the present disclosure.

In FIG. 2, reference numeral 100 denotes a cap assembly. The cap assembly 100 may be positioned in the opening of the case of the rechargeable battery to seal the interior of the case. The cap assembly 100 thereby ensures that the electrode assembly and electrolyte of the rechargeable battery are safely accommodated in the case.

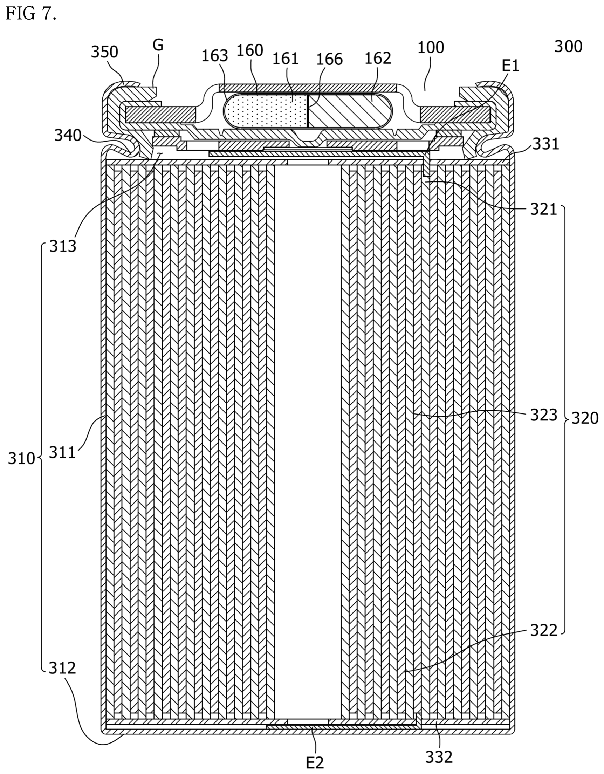

A detailed description of the rechargeable battery will be given below with reference to FIG. 7.

The cap assembly 100 may be coupled to an upper portion of the case when the opening of the case of the rechargeable battery is located at the top. Alternatively, when the opening of the case of the rechargeable battery is located at the bottom, the cap assembly may be coupled to a lower portion of the case.

The cap assembly 100 includes an upper cap 110 and a vent plate 120 facing the upper cap 110.

The upper cap 110 may be located at an uppermost portion of the cap assembly 100. The upper cap 110 is formed to convexly protrude upward. The upper cap 110 may include a terminal portion to be connected to an external circuit in the protruding portion. The upper cap 110 may further include one or more outlets for discharging gas around the terminal portion. The vent plate 120 is located below the upper cap 110.

The cap assembly 100 may further include a lower cap 130 located below the upper cap 110, and the vent plate 120 may be positioned between the upper cap 110 and the lower cap 130.

The vent plate 120 includes at least one notch 121. Gas generated inside the rechargeable battery may be discharged to outside of the case of the rechargeable battery through the notches 121 of the vent plate 120.

The vent plate 120 includes areas in which the notches 121 are formed and a contact portion 122 connecting the areas in which the notches 121 are formed. The contact portion 122 is formed convexly downward.

Although not shown in FIG. 2, the notch 121 may be located in at least a portion of an area that is formed convexly downward. An area of the vent plate 120 that is formed convexly downward may be symmetric about a center axis C.

When the rechargeable battery is overcharged and/or the rechargeable battery operates abnormally, gas may be generated inside the rechargeable battery. The generated gas causes the internal pressure of the case to increase. When the internal pressure of the rechargeable battery increases, the vent plate 120 can be deformed so that the area that is formed convexly downward faces upward due to the pressure. As such, the electrical connection of the vent plate 120 with the electrode assembly may be disconnected. Further, the vent plate 120 may be break along the notch 121. When the vent plate 120 is broken, the gas inside the case is discharged to outside of the case. Thus, the cap assembly 100 can prevent an increase in pressure that would cause the rechargeable battery to explode.

An extension 170 may extend from the vent plate 120 and may be connected to the upper cap 110. The extension 170 may support the vent plate 120 with respect to the upper cap 110 and provide an electrical connection between the upper cap 110 and the vent plate 120.

An insulator 140 is positioned between the lower cap 130 and the extension 170. The insulator 140 may be located on an edge of the lower cap 130 and be formed in a ring shape. The insulator 140 may be formed of a material that electrically insulates the lower cap 130, the extension 170, and the vent plate 120.

A sub-plate 150 may be positioned on a lower side of the lower cap 130 and fixed to a lower surface of the lower cap 130 to block a hole 131 formed in the lower cap 130. The sub-plate 150 may be fixed to the area that is formed convexly at a lower end of the vent plate 120 or may be electrically connected to the corresponding area.

The sub-plate 150 may be located on an upper portion of the electrode assembly and connected to a tab E1 that extends from the electrode assembly. The tab E1 may be electrically connected to each of the positive and/or negative electrodes of the electrode assembly.

A curable component-containing structure 160 is positioned between the upper cap 110 and the vent plate 120. The curable component-containing structure 160 contains a curable component 161. The hardness of the curable component 161 can increase by at least a portion of the curable component 161 at high temperatures. Accordingly, when the rechargeable battery is stored or used at high temperatures, by delaying a time when the vent plate is detached from the lower cap, the deformation of the cap assembly can be suppressed and the difference in operating pressure of the cap assembly between room temperature and high temperature can be reduced.

In a specific example, the curable component 161 may have a curing initiation temperature of 60 °C or higher, for example, 60 to 95 °C. In this range at room temperature, the curable component 161 does not interfere with the operation of the vent plate when gas is generated inside the battery and deformation of the vent plate can be suppressed at high temperatures.

A maximum thickness T of the curable component-containing structure 160 may range from 90 to 110%, for example, 95 to 105%, of a distance H between the upper cap 110 and the vent plate 120. In this range, the time when the vent plate is detached can be delayed.

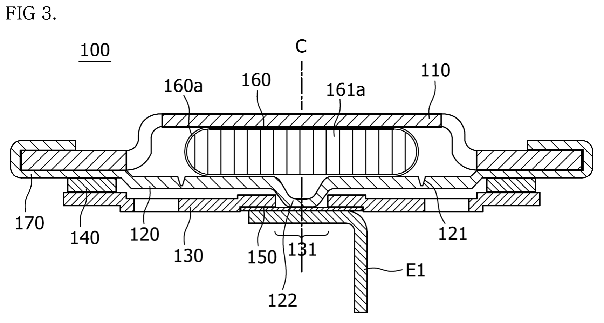

FIG. 3 shows a state in which the curable component of the curable component-containing structures has been cured. The operation of the curable component-containing structure will be described with reference to FIGS. 2 and 3.

Referring to FIG. 2, when the curable component of the curable component-containing structure is not cured, the curable component-containing structure is positioned between the upper cap and the vent plate and does not affect the operation of the vent plate.

Referring to FIG. 3, when the curable component is cured, the curable component-containing structure 160a may be transformed into a solid state as the hardness of a cured product 161 of the curable component is increased, thereby preventing the vent plate from being detached from the sub-plate 150 by the internal pressure of the case of the rechargeable battery. Thus, the curable component-containing structure may extend the storage time or usage time at high temperatures.

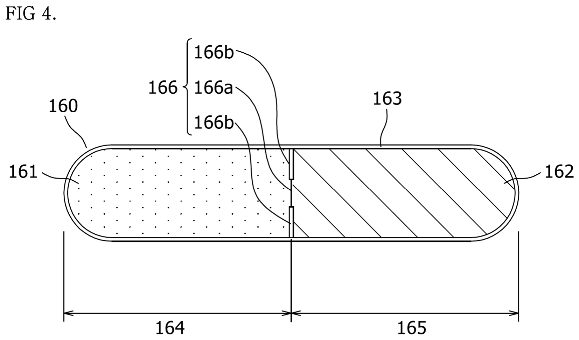

FIG. 4 is a view of a curable component-containing structure.

The curable component 161 is included inside the curable component-containing structure 160. However, the present disclosure is not limited to such a configuration, and the curable component may be included, for example, on an outer surface of the curable component-containing structure.

The curable component-containing structure 160 may include a support 163 for including the curable component 161 in the structure. That is, the curable component-containing structure 160 may include the support 163 that defines an internal space and the curable component 161 may be included in an internal space of the support 163.

The support 163 may be fluid. Here, "fluid" may mean that the shape of the support is not fixed, but the shape is deformed by an external force. When the rechargeable battery is overcharged and/or operates abnormally when stored or used at room temperature, gas may be generated inside the rechargeable battery. The fluid support may allow the gas to be discharged without interfering with the operation of the vent plate when the gas is generated. The support 163 may be flexible.

The support 163 may be elastic. As such, when the rechargeable battery is overcharged and/or operates abnormally when stored or used at room temperature, gas may be generated inside the rechargeable battery. The fluid support may allow the gas to be discharged without interfering with the operation of the vent plate as the gas is generated.

The support 163 may be a film or plate formed of a material having high heat resistance that may withstand a high temperature. For example, the support 163 may include a polyolefin-based resin such as polyethylene (PE) or polypropylene (PP), a polyimide-based resin, a polyamide-based resin, a polyimideamide-based resin, a polyester-based resin, and the like. But the present disclosure is not limited to these examples.

The support 163 may have a thickness of 0.2 mm or less, for example, 0.05 to 0.2 mm. In this range, the curable component may be maintained in the internal space without leaking from the curable component.

The support 163 may have a shape of a capsule, a pouch, or a bag with an empty interior, but the present disclosure is not limited to these shapes. In addition, the support may have a cross section with an open interior, such as a circle, an oval, an amorphous shape, a polygon, or the like, but the present disclosure is not limited to such cross-sectional shapes.

The curable component 161 may be liquid at room temperature. Such a configuration may facilitate the manufacture of the curable component-containing structure by allowing the curable component to be easily incorporated into the support. In addition, the liquid curable component may be more fluid as compared to a solid phase and, thus, may not affect deformation of the cap assembly, especially detachment of the vent plate, at room temperature.

The curable component may include a urethane-based resin, a silicone-based resin, an epoxy-based resin, an amine-based resin, an amide-based resin, a (meth)acryl-based resin, an oligomer, or a monomer. But the present disclosure is not limited to these examples. For example, the curable component may be an epoxy-based resin, an oligomer, or a monomer. In a specific example, the epoxy-based curable component may be a condensation reaction product of epichlorohydrin and a bisphenol-based compound including bisphenol A and the like.

The curable component may be included in an amount of 50 wt% or more, for example, 50 to 100 wt% or 50 to 90 wt% in the curable component-containing structure. In this range, the curable component may be easily cured at high temperature to provide a hardness that is advantageous for preventing detachment of the vent plate.

The curable component-containing structure may further include a curing agent 162 in addition to the curable component. FIGS. 2 and 4 show a curable component-containing structure including both a curable component and a curing agent. However, when the curable component can be spontaneously cured by heat without a curing agent, a cap assembly including a curable component-containing structure and not including a curing agent may be used.

The curing agent may increase a curing speed of the curable component when the rechargeable battery is stored or used at high temperatures. By causing the curable component to cure quickly as the temperature changes from room temperature to high temperature, deformation of the cap assembly can be quickly suppressed.

The curing agent may be selected based on the type of curable component. That is, the curable component-containing structure may optionally include a curing agent having a functional group capable of curing the curable component. For example, the curing agent may include a curing agent for an epoxy-based resin such as a phenol-based, amine-based, acid anhydride-based resin, etc. In other examples, the curing agent may include a (meth)acryl-based curing agent such as an isocyanate-based, an aziridine-based, an epoxy-based, a carbodiimide-based curing agent, etc. In further examples, the curing agent may include one or more of a polyamine, an amine addition product, a polyamide, and a polyimide.

The curing agent may be liquid or solid at room temperature and is preferably liquid.

The curing agent may be included in an amount of 10 wt% or more in the curable component-containing structure. In this range, it is possible to easily secure a hardness that is advantageous in preventing detachment of the vent plate by accelerating the curing of the curable component. For example, the curing agent may be included in an amount of 10 to 50 wt% in the curable component-containing structure.

The curable component and the curing agent may be separated in the curable component-containing structure. Here, "separated" means that the curable component-containing structure includes a support having an internal space, and the internal space is divided into a first zone 164 and a second zone 165 by a separator. Only the curable component is included in the first zone, and only the curing agent is included in the second zone. Because the curable component and the curing agent are separated, spontaneous curing promotion of the curable component by the curing agent can be prevented.

The separator 166 may separate the curable component and the curing agent, with a passage or hole being formed in the separator 166 that allows the curing agent to move toward the curable component or allow the curable component to move toward the curing agent, thereby promoting curing of the curable component by the curing agent.

To this end, the separator 166 may include at least an area (shrinkable area) 166a that shrinks when exposed to high temperatures. The shrinkable area 166a may shrink upon exposure to high temperatures and thus form a passage or hole in the separator 166, thereby increasing the degree of freedom of movement of the curing agent and the curable component. The shrinkable area 166a may be formed of a material that shrinks when exposed to heat, and the material may be a material known to those skilled in the art. The shrinkable area 166a may be thinner than the fixing area 166b to implement the effect of shrinking due to heat.

According to an embodiment, the shrinkable area 166a may be formed of a film such as polypropylene, polyethylene terephthalate, etc.

According to an embodiment, the shrinkable area 166a may shrink by 10 to 20% of its total width of the shrinkable area when left at 90 °C for 10 hours.

The separator 166 may be composed of only the shrinkable area 166a. However, the separator 166 may further include the fixing area 166b for fixing the shrinkable area 166a to the support 163. The fixing area 166b may fix the shrinkable area 166a to the support 163 and form the first zone 164 and the second zone 165.

The fixing area 166b may not shrink when exposed to heat. Accordingly, by preventing the contact between the curable component and the curing agent at room temperature, deformation of the cap assembly at room temperature can be suppressed. The fixing area 166b may be formed of a heat-resistant material that does not shrink when exposed to heat, and a material therefor may include a material known to those skilled in the art.

According to an embodiment, the separator 166 may include two fixing areas 166b connected to the support 163 and the shrinkable area 166a located between the fixing areas 166b and connected to the fixing areas 166b.

According to an embodiment, a thickness of the fixing area 166b may be greater than that of the shrinkable area 166a.

A method of manufacturing a curable component-containing structure is not limited as long as it can provide the above-described support, the curable component, the curing agent, and the separator.

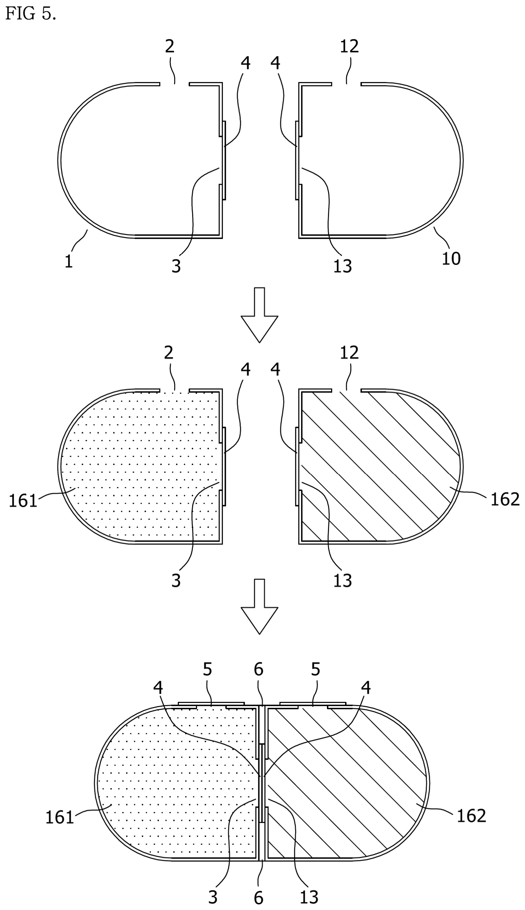

FIG. 5 shows a process of manufacturing a curable component-containing structure according to an embodiment.

FIG. 5 shows a process of manufacturing a curable component-containing structure, which includes a support having an internal space, in which the internal space is divided into a first zone and a second zone by a separator, only the curable component is included in the first zone, only the curing agent is included in the second zone, and the separator includes at least a shrinkable area. However, the present disclosure is not limited to the depicted process.

Referring to FIG. 5, a first container 1 for forming a first zone and a second container 10 for forming a second zone is prepared.

A first inlet 2 for injecting a curable component is provided in the first container 1. A second inlet 3 for forming a shrinkable area may be formed on the first container 1. The second inlet 3 may be sealed with a shrinkable film or a shrinkable tape 4. The shrinkable film or the shrinkable tape may be an adhesive film that is easy to install. Because the first container 1 may be formed to have only the first inlet 2 without the second inlet 3, the first inlet 2 may be used to inject the curable component and form the shrinkable area.

The second container 10 may have a third inlet 12 for injecting the curing agent and a fourth inlet 13 for forming the shrinkable area. The fourth inlet 13 may be sealed with the shrinkable film or the shrinkable tape 4. The shrinkable film or the shrinkable tape may be an adhesive film that is easy to install. Because the second container 10 may be formed to have only the third inlet 12 without the fourth inlet 13, the third inlet 12 may be used to inject the curable component and form the shrinkable area.

The curable component 161 may be injected through the first inlet 2 of the first container 1, and the curing agent 162 may be injected through the third inlet 12 of the second container 10. The injection method is not limited and may be performed using an injection device such as a syringe, a pump, etc.

The first inlet 2 is sealed, and the third inlet 12 is sealed. The sealing may be performed by an adhesive tape 5 or the like, but is not limited thereto.

The curable component-containing structure is assembled by bonding the first container 1 and the second container 10 to each other using an adhesive layer 6 or the like.

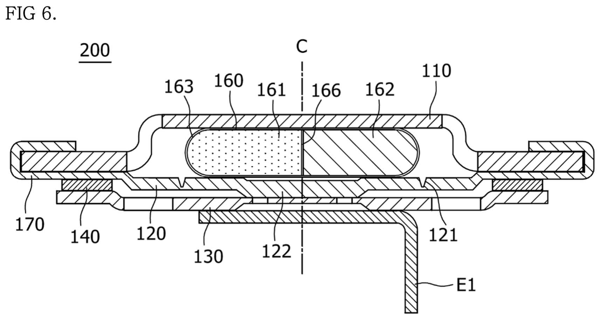

FIG. 6 is a schematic view of a cap assembly according to another embodiment of the present disclosure.

In FIG. 6, reference numeral 200 denotes a cap assembly. The cap assembly 200 includes an upper cap 110, a curable component-containing structure 160, and an insulator 140. The upper cap 110, the curable component-containing structure 160, and the insulator 140 are substantially the same as those described above with respect to FIGS. 2 to 4.

The cap assembly 200 is substantially the same as the cap assembly of FIG. 2 except with respect to the vent plate 120 and the lower cap 130.

The vent plate 120 includes areas in which notches 121 are formed and a contact portion 122 connecting the areas in which the notches 121 are formed. The contact portion 122 may protrude from the vent plate 120 to the lower cap 130 and may contact the lower cap 130. The contact portion 122 may electrically connect the vent plate 120 to the lower cap 130. Accordingly, a current generated from the electrode assembly may be transmitted to the upper cap 110 sequentially through the first electrode tab E1, the lower cap 130, the vent plate 120 including the contact portion 122, and the extension 170.

FIG. 7 is a schematic of a rechargeable battery according to an embodiment of the present disclosure.

Referring to FIG. 7, a rechargeable battery 300 may include a case 310, an electrode assembly 320, and a cap assembly, with the cap assembly being as described above.

Hereinafter, an example in which the rechargeable battery 300 is a cylindrical lithium ion rechargeable battery will be described. However, the present disclosure is not limited thereto, and the rechargeable battery 300 may be, for example, a lithium polymer battery or a prismatic battery.

The case 310 may form an exterior of the rechargeable battery 300. The case 310 may be electrically conductive. For example, the case 310 may be formed from at least one of steel, stainless steel, aluminum, and an aluminum alloy. Accordingly, the case 310 may protect the electrode assembly 320 from an external impact and perform a heat dissipation function of dissipating heat generated by the charging and discharging operation of the electrode assembly 320 to outside of the rechargeable battery 300.

The case 310 may include a cylindrical sidewall portion 311, a bottom portion 312 that closes a lower end of the sidewall portion 311, and an opening 313 that opens an upper end of the sidewall portion 311.

The electrode assembly 320 may function as a unit structure that performs charging and discharging operation of power in the rechargeable battery 300. The electrode assembly 320 may include a first electrode plate 321, a second electrode plate 322, and a separator 323 positioned between the first electrode plate 321 and the second electrode plate 322.

The electrode assembly 320 may be wound around a winding axis.

The first electrode plate 321 may function as a positive electrode of the electrode assembly 320. The first electrode plate 321 may be formed from a foil including a metal material such as aluminum or an aluminum alloy. The type, size, shape, and the like of the first electrode plate 321 are not particularly limited as long as the first electrode plate 321 has conductivity and does not cause an undesirable chemical change in a rechargeable battery.

At least a portion of the first electrode plate 321 may be coated with a first active material layer. Specifically, both surfaces of the first electrode plate 321 may be coated with the first active material layer or alternatively, only one surface of the first electrode plate 321 may be coated with the first active material layer.

Since the first electrode plate 321 serves as a positive electrode, the first active material layer may include a positive electrode active material.

The positive electrode active material may be a compound capable of reversible intercalation and deintercalation of lithium (a lithiated intercalation compound). More specifically, as the positive electrode active material, one or more of composite oxides of a metal selected from cobalt, manganese, nickel, iron, and a combination thereof and lithium may be used.

As an example, the positive electrode active material may include at least one of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, LNCM). Here, 0<x<1, 0<y<1, 0<z<1, and x+y+z=1 may be satisfied. The positive electrode active material may include only one of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, LNCM) and include two or all of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, LNCM).

The first active material layer may further include a positive electrode conductive material. The positive electrode conductive material is used to provide conductivity to the first active material layer, and any material that is an electrically conductive material that does not cause an undesirable chemical change in a battery may be used. Examples of the positive electrode conductive material include carbon-based materials, such as natural graphite, artificial graphite, carbon black, acetylene black, Ketjen black, carbon fibers, carbon nanofibers, carbon nanotubes, and the like, metal-based materials in the form of metal powder or metal fibers containing copper, nickel, aluminum, silver, and the like, conductive polymers, such as polyphenylene derivatives, and the like, or a mixture thereof.

The first active material layer may further include a positive electrode binder. The positive electrode binder serves to bond particles constituting the positive electrode active material and also attach the positive electrode active material to the first electrode plate 321.

Examples of the positive electrode binder include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

When the aqueous binder is used as the positive electrode binder, the aqueous binder may further include a cellulose-based compound capable of imparting viscosity. As the cellulose-based compound, one or more of carboxymethyl cellulose, hydroxypropylmethyl cellulose, methyl cellulose, and an alkali metal salt thereof may be mixed and used. The alkali metal may include Na, K, or Li.

The dry binder may be a polymer material capable of being fiberized, for example, polytetrafluoroethylene, polyvinylidene fluoride, a polyvinylidene fluoride-hexafluoropropylene copolymer, polyethylene oxide, or a combination thereof.

The first electrode plate 321 may be electrically connected to the cap assembly 100. As the first electrode plate 321 may function as the positive electrode of the electrode assembly 320, the cap assembly 100 may function as a positive electrode terminal of the rechargeable battery 300. For example, the first electrode plate 321 may be electrically connected to the cap assembly 100 by the first electrode tab E1. The first electrode tab E1 may include a conductive metal material such as copper, a copper alloy, nickel, or a nickel alloy. The first electrode tab E1 may be disposed on an upper side of the electrode assembly 320, and ends of the first electrode tab E1 may be connected to the first electrode plate 321 and the cap assembly 100. One end of the first electrode tab E1 may be directly connected to the first electrode plate 321 and may also be indirectly connected to the first electrode plate 321 via a separate current collector plate (not shown) connected to the first electrode plate 321. However, the first electrode plate 321 is not limited to such a configuration and may be directly connected to the cap assembly 100 without the first electrode tab E1.

The second electrode plate 322 may function as a negative electrode of the electrode assembly 320. The second electrode plate 322 may be in a form of a foil including a metal material, such as copper, a copper alloy, nickel, or a nickel alloy. The second electrode plate 322 may be disposed to face the first electrode plate 321 at a predetermined distance.

The type, size, shape, and the like of the second electrode plate 322 are not limited as long as the second electrode plate 322 has conductivity and does not cause an undesirable chemical change in a rechargeable battery.

At least a part of the second electrode plate 322 may be coated with a second active material layer. Specifically, both surfaces of the second electrode plate 322 may be coated with the second active material layer or alternatively, only one surface of the second electrode plate 322 may be coated with the second active material layer.

When the second electrode plate 322 serves as a negative electrode, the second active material layer may include a negative electrode active material. The negative electrode active material may include a material capable of reversibly intercalating/deintercalating lithium ions, lithium metal, an alloy of lithium and a metal, a material capable of doping and dedoping lithium, or a transition metal oxide.

The material capable of reversibly intercalating/deintercalating lithium ions may include a carbon-based negative electrode active material, for example, crystalline carbon, amorphous carbon, or a combination thereof. An example of crystalline carbon may include graphite such as amorphous, plate-like, flaky, spherical, or fibrous natural graphite or artificial graphite, and examples of amorphous carbon may include soft carbon, hard carbon, mesophase pitch carbide, calcined coke, etc.

As the alloy of lithium and a metal, an alloy of lithium and a metal selected from Na, K, Rb, Cs, Fr, Be, Mg, Ca, Sr, Si, Sb, Pb, In, Zn, Ba, Ra, Ge, Al, and Sn may be used.

As the material capable of doping and dedoping lithium, a Si-based negative electrode active material or a Sn-based negative electrode active material may be used. The Si-based negative electrode active material may be silicon, a silicon-carbon composite, SiOₓ (x= 1 or 2), a Si-Q alloy, or a combination thereof. In the formula Si-Q, Q is selected from an alkali metal, an alkaline earth metal, a Group 13 element, a Group 14 element (excluding Si), a Group 15 element, a Group 16 element, a transition metal, a rare earth element, and a combination thereof. The Sn-based negative electrode active material may be Sn, SnO₂, a Sn-based alloy, or a combination thereof.

The silicon-carbon composite may be a composite of silicon and amorphous carbon. According to an embodiment, the silicon-carbon composite may be in the form of silicon particles having surfaces are coated with amorphous carbon. For example, the silicon-carbon composite may include secondary particles (core) in which primary silicon particles are aggregated and amorphous carbon coating layers (shell) are provided on surfaces of the secondary particles. The amorphous carbon may be located between the primary silicon particles, for example, so that the primary silicon particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer located on the surface of the core.

The Si-based negative electrode active material or Sn-based negative electrode active material may be used in combination with a carbon-based negative electrode active material.

The second active material layer may further include a negative electrode conductive material and a negative electrode binder.

The negative electrode conductive material is used to impart conductivity to the second active material layer, and any material that is an electrically conductive material and does not cause an undesirable chemical change in a battery may be used. Examples of the negative electrode conductive material include carbon-based materials such as natural graphite, artificial graphite, carbon black, acetylene black, Ketjen black, carbon fibers, carbon nanofibers, carbon nanotubes, and the like, metal-based materials in the form of metal powder or metal fibers containing copper, nickel, aluminum, silver, and the like, conductive polymers such as polyphenylene derivatives and the like, or a mixture thereof.

The negative electrode binder functions to bond particles constituting the negative electrode active material and also functions to bond the negative electrode active material to the second electrode plate 322.

Examples of the negative electrode binder include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

When the aqueous binder is used as the negative electrode binder, the aqueous binder may further include a cellulose-based compound capable of giving viscosity. As the cellulose-based compound, one or more of carboxymethyl cellulose, hydroxypropylmethyl cellulose, methyl cellulose, and an alkali metal salt thereof may be mixed and used. The alkali metal may include Na, K, or Li.

The dry binder may be a polymer material capable of being fiberized, for example, polytetrafluoroethylene, polyvinylidene fluoride, a polyvinylidene fluoride-hexafluoropropylene copolymer, polyethylene oxide, or a combination thereof.

The second electrode plate 322 may be electrically connected to the case 310. For example, the second electrode plate 322 may be electrically connected to the case 310 by a second electrode tab E2. As the second electrode plate 322 functions as the negative electrode of the electrode assembly 320, the case 310 may function as a negative electrode terminal of the rechargeable battery 300. The second electrode tab E2 according to the present embodiment may include a conductive metal material such as copper, a copper alloy, nickel, or a nickel alloy. The second electrode tab E2 may be disposed on a lower side of the electrode assembly 320, and ends of the second electrode tab E2 may be connected to the second electrode plate 322 and the bottom portion 312 of the case 310. One end of the second electrode tab E2 may be directly connected to the second electrode plate 322 and may also be indirectly connected to the second electrode plate 322 via a separate current collector plate (not shown) connected to the second electrode plate 322. However, the second electrode plate 322 is not limited to such a configuration and may be directly connected to the case 310 without the second electrode tab E2.

The separator 323 may be disposed between the first electrode plate 321 and the second electrode plate 322. The separator 323 may prevent a short circuit between the first electrode plate 321 and the second electrode plate 322 while allowing the movement of lithium ions between the first electrode plate 321 and the second electrode plate 322.

As the separator 323, a multilayered membrane of polyethylene, polypropylene, polyvinylidene fluoride or two or more layers thereof may be used, and mixed multilayer separators such as a polyethylene/polypropylene two-layer separator, a polyethylene/polypropylene/polyethylene three-layer separator, or a polypropylene/polyethylene/polypropylene three-layer separator may be used.

The separator 323 may include a porous substrate and a coating layer that includes an organic material, an inorganic material, or a combination thereof. The separator 323 may be provided on one or both surfaces of the porous substrate.

The porous substrate may be a polymer film made of a polymer selected from polyolefins such as polyethylene and polypropylene, polyesters such as polyethylene terephthalate and polybutylene terephthalate, polyacetal, polyamide, polyimide, polycarbonate, polyether ketone, polyarylether ketone, polyetherimide, polyamideimide, polybenzimidazole, polyether sulfone, polyphenylene oxide, cyclic olefin copolymers, polyphenylene sulfide, polyethylene naphthalate, glass fiber, TEFLON^{®}, and polytetrafluoroethylene, or a copolymer or mixture of two or more of the above materials.

The organic material may include a polyvinylidene fluoride-based polymer or a (meth)acryl-based polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof. But the present disclosure is not limited to these examples.

The organic material and the inorganic material may be present as a mixture in one coating layer. In other embodiments, the organic material and the inorganic material may be present in the form in which a coating layer containing an organic material and a coating layer containing an inorganic material are stacked.

The separator 323 may be provided as a pair of separators. The pair of separators 323 may be disposed to face each other on both surfaces of the first electrode plate 321 or the second electrode plate 322. The pair of separators 323 may be wound around the winding axis together with the first electrode plate 321 and the second electrode plate 322.

A first insulating plate 331 and a second insulating plate 332 may be disposed at both sides of the electrode assembly 320. The first insulating plate 331 and the second insulating plate 332 may include an insulating material such as rubber, polyethylene (PE), polypropylene (PP), polyethylene terephthalate (PET), etc. The first insulating plate 331 can prevent the electrode assembly 320 from contacting the cap assembly 100, and the second insulating plate 332 can prevent the electrode assembly 320 from contacting the bottom portion 312.

The cap assembly 100 may be coupled to the case 310, and the cap assembly 100 may seal the opening 313 of the case 310.

The cap assembly 100 may be disposed at an upper end of the sidewall portion 311, that is, the opening 313. A beading part 340 concavely formed toward the center axis C of the case 310 may be formed on the sidewall portion 311. The beading part 340 may be disposed on the lower side of the cap assembly 100 to restrict the cap assembly 100 from being inserted into the case 310 beyond a set distance.

A gasket G may be disposed between the case 310 and the cap assembly 100. The gasket G may fix the cap assembly 100 to the opening 313 by its elastic restoring force, electrically insulate the case 310 and the cap assembly 100 from each other, and block moisture or an electrolyte from flowing in or out between the case 310 and the cap assembly 100.

The gasket G may include an insulating material such as rubber, polyethylene (PE), polypropylene (PP), polyethylene terephthalate (PET), etc. The gasket G may be formed to have a substantially ring shape and formed to be disposed on the inner surfaces of the beading part 340 and/or a crimping part 350. An outer surface of the gasket G may be in close contact with inner surfaces of the beading part 340 and/or the crimping part 350, and an inner surface of the gasket G may be in close contact with an outer surface of the cap assembly 100.

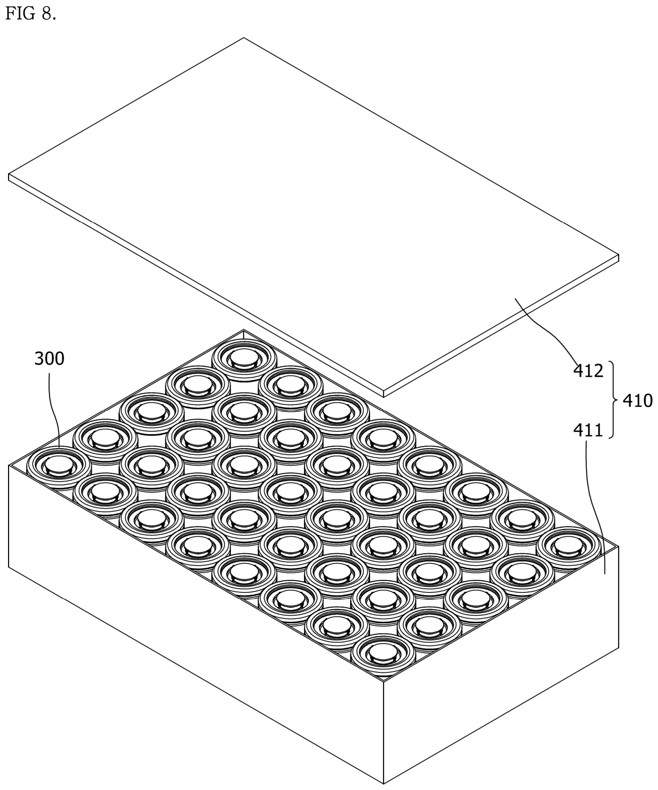

FIG. 8 is a schematic view of a battery pack according to an embodiment of the present disclosure.

Referring to FIG. 8, the battery pack includes a housing 410 and a rechargeable battery 300.

The housing 410 may form an exterior of the battery pack and provide a space in which the rechargeable batteries 300 may be accommodated.

The housing 410 may include a housing body 411 and a cover 412.

The housing body 411 may be box shaped with an open interior and one open side. A cross-sectional shape of the housing body 411 is not limited to the quadrangular shape shown in FIG. 8 and may be other shapes, such as a polygon, circle, oval, etc.

The cover 412 may be coupled to the housing body 411 and may close the open space of the housing body 411. For example, the cover 412 may be formed in a plate shape and disposed to face the open side of the housing body 411. The cover 412 may be fixed to the housing body 411 by various types of coupling methods, such as bolting, welding, fitting, etc.

The rechargeable batteries 300 may be as described with respect to FIG. 7.

The plurality of rechargeable batteries 300 may be disposed in various patterns, such as a grid shape, a zigzag shape, and the like, inside the housing 410. The plurality of rechargeable batteries 300 may be disposed in parallel. The number of rechargeable batteries 300 may vary depending on the size, shape, and the like of the housing 410.

The plurality of rechargeable batteries 300 may be electrically connected by a busbar (not shown). The plurality of rechargeable batteries 300 may be connected in series or in parallel by the busbar. For example, the busbar may connect the rechargeable batteries 300 disposed in the same row inside the housing 410 in parallel and connect the rechargeable batteries 300 disposed in two adjacent rows in series. The busbar may be formed of an electrically conductive material, such as copper, aluminum, nickel, etc.

Hereinafter, the results of an experiment measuring the degree of deformation of the vent plate during the assembly process of the rechargeable battery according to the present disclosure will be described.

### [Example 1]

### (Manufacture of cap assembly)

The cap assembly as described above with respect to FIG. 2 was made. The cap assembly includes the curable component-containing structure described above.

A first container (having a first inlet and a second inlet) and a second container (having a third inlet and a fourth inlet) each having two inlets formed as polypropylene (PP) injection-molded products were prepared. The second inlet of the first container was sealed with a shrinkable film, a curable component was injected through the first inlet, and the first inlet was sealed with a sealing tape. The curable component was an epoxy-based resin, which is a linear condensation reaction product of bisphenol A and epichlorohydrin. The fourth inlet of the second container was sealed with a shrinkable film, a curing agent was injected through the third inlet, and the third inlet was sealed with a sealing tape. The curing agent was a compound (diaminodiphenylmethane) having an amine group. The sealing tape was an adhesive tape. The second inlet of the first container and the fourth inlet of the second container faced each other, and the remaining area except for the second inlet and the fourth inlet was laminated with an adhesive film, thereby forming a curable component-containing structure.

The curable component-containing structure had a maximum height of 1.3 mm when the epoxy resin was cured.

### (Manufacture of negative electrode)

A slurry for a negative electrode was prepared by mixing 97 wt% graphite particles with an average particle diameter of 25 µm, 1.5 wt% styrene-butadiene rubber (SBR) binder, and 1.5 wt% carboxymethyl cellulose (CMC). The mixture was added to distilled water and stirred for 60 minutes using a mechanical stirrer. The slurry was applied on a 10 µm thick copper foil using a doctor blade, dried in a hot air dryer at 100 °C for 0.5 hours, dried again for 4 hours under vacuum and 120 °C conditions, and then roll-pressed to make a negative electrode.

### (Manufacture of positive electrode)

A slurry for a positive electrode was prepared by mixing 97 wt% lithium cobalt-based oxide, 1.5 wt% carbon black powder as a conductive material, and 1.5 wt% polyvinylidene fluoride (PVdF), adding the mixture to N-methyl-2-pyrrolidone solvent, and then stirring the mixture for 30 minutes using a mechanical stirrer. The slurry was applied on a 20 µm thick aluminum foil using a doctor blade, dried in a hot air dryer at 100 °C for 0.5 hours, dried again for 4 hours under vacuum and 120 °C conditions, and then roll-pressed to make a positive electrode.

### (Manufacture of battery)

An electrode assembly jelly roll was made by interposing a separator (polyethylene film) between the above manufactured positive and negative electrodes and winding the electrode. A battery was made by inserting the jelly roll into a circular case, injecting an electrolyte, and performing vacuum-sealing with the above manufactured cap assembly. As the electrolyte, a solution in which 1.3M LiPF₆ was dissolved in a mixed solvent of ethylene carbonate (EC), ethyl methyl carbonate (EMC), and diethyl carbonate (DEC) in a volume ratio of 3:5:2 was used.

### [Example 2]

A curable component-containing structure and a battery were made in the same manner as in Example 1, except that the amount of the epoxy-based resin introduced through the first inlet in Example 1 was increased. The curable component-containing structure had a maximum height of 1.5 mm when the epoxy-based resin was cured.

### [Comparative Example 1]

A battery was made in the same manner as in Example 1, except that the battery was made using a cap assembly that did not include the curable component-containing structure as in Example 1.

### [Measurement of operating pressure at each of room temperature and high temperature]

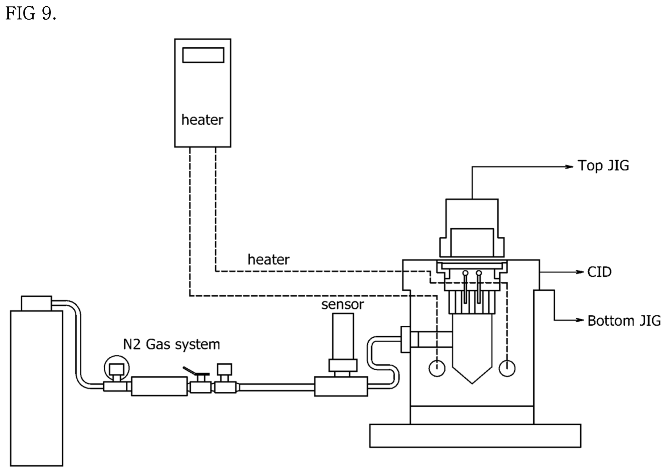

The room temperature was 25 °C, and the high temperature was 90 °C. The operating pressure of the example and comparative batteries were measured with reference to the system shown in FIG. 9. A pressure upon fracture was measured by injecting nitrogen gas into a Bottom JIG provided with a cap assembly (CID) and operating the cap assembly. The operating pressure at room temperature was measured without additional heat treatment of the Bottom JIG by a heater. The operating pressure at high temperature was measured while maintaining the inside of the Bottom JIG at a constant temperature of 90 °C by the heater.

### [Measurement of operating time at high temperature]

The above manufactured batteries were put into a chamber with a constant temperature of 90 °C. Then, a temperature sensor, a voltage sensor, and a current sensor were installed in the batteries, and the batteries were operated. The first time when current was cut off during the operation of the batteries was recorded as the operating time at high temperature. The longer the operating time at high temperature, the more deformation is suppressed even after being stored at high temperature, which means that the usable time of the rechargeable battery at high temperature can be extended.

The results are shown in Table 1.

**[Table 1]**

| | Comparative Example 1 | Example 1 | Example 2 |
|---|---|---|---|
| Operating pressure (A, kgf/cm²) at room temperature | 16.03 | 16.12 | 16.10 |
| Operating pressure (B, kgf/cm²) at high temperature | 13.33 | 15.59 | 16.05 |
| Difference in operating pressure (A-B, kgf/cm²) | 2.7 | 0.53 | 0.05 |
| Operating time at high temperature (hr) | 35 | 110 | 150 |

As shown in Table 1, the rechargeable battery of the present disclosure can significantly reduce the difference in operating pressure between room temperature and high temperature. Accordingly, the rechargeable battery of the present disclosure can extend the operating time at high temperature, thereby increasing the usability of the rechargeable battery at both room temperature and high temperature.

According to the present disclosure, deformation in a rechargeable battery can be suppressed even after exposure to high temperatures, thereby extending the usable time of a rechargeable battery and increasing the usability of the rechargeable battery at high temperatures.

According to the present disclosure, because a difference in operating pressure between room temperature and high temperature is small, a rechargeable battery is more useable notwithstanding changes in temperature between room temperature and high temperature.

The effects obtainable through the present disclosure are not limited to the above effects, and other technical effects that are not described will be clearly understood by those skilled in the art based on the description herein.

Although the present disclosure has been described with reference to embodiments shown in the drawings, these are merely examples, and those skilled in the art will understand that various modifications and equivalent other embodiments are possible therefrom. In addition, the present disclosure may also be used in other fields.

## Claims

1. A cap assembly comprising:
an upper cap;
a vent plate located below the upper cap; and
a curable component-containing structure located between the upper cap and the vent plate.

2. The cap assembly of claim 1, wherein the curable component has a curing initiation temperature of 60 °C or higher.

3. The cap assembly of claim 1 or 2, wherein the curable component is liquid at room temperature.

4. The cap assembly of claim 1, 2 or 3, wherein the curable component includes at least one of urethane-based resin, a silicone-based resin, an epoxy-based resin, an amine-based resin, an amide-based resin, a (meth)acryl-based resin, an oligomer, and a monomer.

5. The cap assembly of any preceding claim, wherein the curable component is included in the curable component-containing structure in an amount of 50 wt% or more.

6. The cap assembly of any preceding claim, wherein the curable component-containing structure includes a support having an open internal space, with the curable component provided in the open space of the support.

7. The cap assembly of claim 6, wherein a thickness of the support is 0.2 mm or less.

8. The cap assembly of claim 6 or 7, wherein the support is elastic.

9. The cap assembly of claim 6, 7 or 8, wherein the support includes one or more of a polyolefin-based resin, a polyimide-based resin, a polyamide-based resin, a polyimideamide-based resin, and a polyester-based resin.

10. The cap assembly of any one of claims 6 to 9, wherein the curable component-containing structure further comprises a curing agent.

11. The cap assembly of claim 10, wherein the curing agent is included in the curable component-containing structure in an amount of 10 to 50 wt%, and/or
wherein the curing agent is liquid at room temperature, and/or
wherein the curing agent includes one or more of phenol-based, amine-based, acid anhydride-based, isocyanate-based, aziridine-based, epoxy-based, carbodiimide-based, polyamide-based, and polyimide-based materials.

12. The cap assembly of claim 10 or 11, wherein the open space of the support is divided into a first zone and a second zone by a separator, and optionally
wherein the first zone includes the curable component, and the second zone includes the curing agent, and/or
wherein the separator includes a shrinkable area that shrinks at high temperatures, and/or
wherein the separator includes a fixing area that fixes the shrinkable area to the support.

13. The cap assembly of any preceding claim, wherein a maximum thickness of the curable component-containing structure ranges from 90 to 110% of a distance between the upper cap and the vent plate.

14. A rechargeable battery comprising:
a case including an opening;
an electrode assembly accommodated in the case;
a cap assembly according to any preceding claim, wherein the upper cap is disposed in the opening; and
a lower cap facing the upper cap and connected to the electrode assembly;
wherein the vent plate is disposed between the upper cap and the lower cap.

15. A battery pack comprising:
a housing; and
a plurality of rechargeable batteries disposed inside the housing,
wherein each of the rechargeable batteries is according to claim 14.
